# EUROPEAN PATENT SPECIFICATION

(11) **EP 2 174 514 B1**
(45) Date of publication and mention of the grant of the patent: **04.09.2013**
(21) Application number: 08774607.9
(22) Date of filing: 01.07.2008
(51) Int. Cl.: H04W 36/00

(54) **DISTRIBUTION OF SYSTEM INFORMATION CONTAINING VALIDITY INFORMATION FOR IMPROVED CELL RESELECTION**
VERTEILUNG VON VALIDITÄTSINFORMATIONEN ENTHALTENDEN SYSTEMINFORMATIONEN FÜR VERBESSERTE ZELLENNEUAUSWAHL
DISTRIBUTION D'INFORMATIONS SYSTÈME CONTENANT DES INFORMATIONS DE VALIDITÉ POUR LA RESÉLECTION AMÉLIORÉE D'UNE CELLULE

(30) Priority: 02.07.2007 GB 0712776
(43) Date of publication of application: 14.04.2010
(73) Proprietor: Nokia Siemens Networks OY, 02610 Espoo (FI)
(72) Inventor: HOLE, David Philip, Hampshire SO52 9NP (GB)
(86) International application number: PCT/EP2008/058463
(87) International publication number: WO 2009/004012

(56) References cited:
- EP-A- 1 708 413
- WO-A-2005/117297
- ANDRZEJ PACKIEWICZ: "3GPP TSG RAN WG4 #43bis R4-071148 Orlando, USA, 25-29 June 2007 Title Handover and Cell Reselection Interruption time Work item: LTE" [Online] 29 June 2007 (2007-06-29), 3GPP , INTERNET PUBLICATION , XP002502116 Retrieved from the Internet: URL:http://www.3gpp.org/ftp/tsg_ran/WG4_Ra dio/> [retrieved on 2008-10-31] the whole document

## Description

### Field of the invention

The present invention relates to a method, apparatus and system, and in particular but not exclusively to GSM-R (Global System for Mobile communications - Railway).

### Background of the invention

A communication system can be seen as a facility that enables communication between two or more entities such as a user equipment (UE), elements of a communication network and other entities associated with a communication system. A communication system typically operates in accordance with a given standard or specification which sets out what the various entities associated with a communication system are permitted to do and how that should be achieved. For example, communication protocols and/or parameters which shall be used for the connection may be defmed. In other words, a specific set of rules, in which the communication can be based needs to be defined to enable communication by means of the system.

Communication systems providing wireless communication for mobile terminals are known. An example of a wireless network is a cellular network. In cellular systems, a base transceiver station (BTS) or similar access entity serves a mobile terminal or other such wireless user equipment (UE) via a wireless interface between these entities. The communication between the user equipment and the elements of the communication network can be based on appropriate communication protocol. The operation of the base station apparatus and other apparatus required for the communication can be controlled by one or several control entities. The various control entities may be interconnected. One or more gateway nodes may also be provided for connecting the cellular network to other networks. The other networks may comprise, for example, another mobile network, a public switched telephone network (PSTN) and/or other communication networks such as an IP (Internet Protocol) and/or other packet switched networks.

GSM (Global System for Mobile communication) is one example of a cellular system.

GSM-R is based on GSM and provides a wireless communications platform developed specifically for railway communication and applications. It is particularly used to permit communication between train and railway regulation control centres.

In GSM-R communication is often via the VGCS (Voice Group Call Service), also known as ASCI (Advanced Speech Call Items) or VBS (Voice Broadcast Service), whereby multiple users can 'join' a group, and then receive voice communications sent by another member of the group.

VGCS allows a great number of users to participate in the same call. There are three kinds of user: the "talker", the "listener" and the "dispatcher". A talker can become a listener by releasing a Push-To-Talk (PTT) key on their terminal, and a listener can become a talker by pressing the PTT key. An advantage of VGCS is the high spectrum-efficiency. When many users are in the same cell they will use only one frequency for all listeners and two frequencies for the talker.

VBS is a broadcast call group and only the initiator of the call can speak. The others who join the call can only be listeners.

In VGCS the network is not aware of the individual users who are listening to a group call in a particular cell, so there is no network-controlled handover procedure. Instead, mobiles moving from one cell to another autonomously determine that they should perform 'cell reselection'.

To assist this process, the network periodically broadcasts System Information messages on the associated control channel (ACCH) of the group call; these messages include, for example, System Information Type 5 (SI5) which specifies the Absolute Radio Frequency Channel Number (ARFCNs) of the Broadcast Control Channel (BCCH) in the neighbour cells; this allows the user equipment to measure the received strength of the neighbour cell.

The user equipment also needs to know the frequency of the BCCH in order to be able to receive the Notification Channel (NCH), which is carried on the BCCH frequency of the target cell and which describes the radio frequency channel on which group calls are transmitted in that cell.

A proposal to remove the need for the user equipment to read the NCH in the target cell has been made whereby information describing the location of the group call in potential target cells is distributed on the ACCH of the group call channel in the source cell in so-called SI10bis messages. If the information required to identify exactly the frequency or (in the case of hopping channels) frequencies on which the group call channel is carried in a neighbour cell does not fit in an SI10bis message, the network may send in addition an SI10ter type message for the neighbour cell.

While SI5 messages include all neighbour cells, SI10bis messages contain only those cells where the group call is set up.

Key information which is needed by the user equipment is the radio frequency channel (or channels, if frequency hopping is used) the group call is sent on.

If hopping is not used, the channel is described by the ARFCN.

When hopping is used, there are two ways of informing the user equipment.

In the first method the list of all channels used in the cell (Cell Channel Description -CCD) and the subset of those channels used in the hopping sequence (Mobile Allocation - MA) and an index to the list of channels in the hopping sequence (Hopping Sequence Number - HSN) are required.

The second method is called Frequency Short List (FSL): this is only applicable where there are fewer than approximately 7 frequencies in the hopping sequence to be used. This uses 8 octets and specifies completely the hopping channel (compared with 16 octets for the CCD alone).

For background, the existing cell reselection procedure includes (at least) the following steps:
1. The user equipment receives SI5 message in source cell listing BCCH ARFCNs of neighbour cell.
2. User equipment performs measurement of neighbour cell and decides to perform cell reselection.
3. User equipment moves to new cell, reads SI1 message, determines location (e.g. timeslot number of NCH).
4. User equipment reads NCH and determines location of group call.
5. User equipment starts reception of group call.

During steps 3 and 4 the user equipment cannot receive the group call and the user experiences a gap in the reception. It is desired that this gap be minimized, preferably to zero.

One problem which has been identified by the inventors with sending information in the so-called SI10bis message relates to the way in which information distributed in the SI10bis messages is organized, and also the problem that information in these messages may become invalid at some point; however, in such a scenario, it is desirable that correct information is distributed as soon as possible.

EP1708413A describes a solution that improves the service reconfiguration timing for a user equipment receiving an MBMS service by indicating the validity of physical channels.

A particular issue with VGCS calls is that the associated control channels are either slow, I message every 500ms in the case of SACCH, (Slow Associated Control Channel) or degrade voice quality in the case of FACCH (Fast Access Control Channel). In contrast, in packet-switched services, the associated control channel assignment is dynamic and can be made on-demand, if necessary using additional timeslots to minimize degradation of the service.

The inventors have determined that it is desirable to organise neighbour cell information in a very efficient manner. A particular application of VGCS is in railway situations, where it is possible that trains are moving very quickly through cells, performing cell reselection frequently. In this application, mobiles (trains) may stay within the same cell for only a short time (e.g. 10-20 seconds) and it is therefore important that accurate and up-to-date neighbour cell information is distributed very quickly within the source cell.

### Summary of the invention

It is accordingly an aim of some embodiments of the present invention to overcome or at least mitigate one or more of the above identified problems.

According to a first aspect of the present invention, there is provided a method of distributing information to a plurality of user equipment in a group call in a cell to assist the user equipment in cell reselection, the method comprising dividing the information into at least two parts and providing a validity indicator for each part wherein allocation of information to each part is related to the likelihood of that information becoming invalid, and wherein the validity indicator is provided in a validity indicator message and the validity indicator message includes details of changes in cell reselection information and a group call set up indicator.

According to a second aspect of the present invention, there is provided a method of receiving information at a user equipment in a group call in a cell to assist the user equipment in cell reselection, the method comprising receiving the information divided into at least two parts and receiving a validity indicator for each part, wherein the validity indicator is received in a validity indicator message and the validity indicator message includes details of changes in cell reselection information and wherein the validity indicator includes a group call setup indicator.

According to a third aspect of the present invention, there is provided an apparatus for distributing information to a plurality of user equipment in a group call in a cell to assist the user equipment in cell reselection, the apparatus comprising dividing means for dividing the information into at least two parts, and means for providing a validity indicator for each part wherein the dividing means is configured to allocate the information to each part based on the likelihood of that information becoming invalid, and wherein the means for providing a validity indicator provides the validity indicator in a validity indicator message including details of changes in cell reselection information and a group call set up indicator.

According to a fourth aspect of the present invention, there is provided a user equipment comprising receiving means for receiving neighbouring cell information in a group call in a cell to assist the user equipment in cell reselection, the user equipment further configured to carry out receiving the neighbouring cell information divided into at least two parts and receiving a validity indicator for each part, wherein the validity indicator is received in a validity indicator message and the validity indicator message includes details of changes in cell reselection information and wherein the validity indicator includes a group call setup indicator.

According to a fifth aspect of the present invention, there is provided a computer program configured to perform the steps of the method according to the first aspect of the present invention, when the program is run on a processor of an apparatus according to the third aspect.

According to a sixth aspect of the present invention, there is provided a computer program configured to perform the steps of the method according to the second aspect of the present invention, when the program is run on a processor of an user equipment according to the fourth aspect.

### Brief description of the drawings

For a better understanding of the present invention reference will be made by way of example only to the accompanying drawings in which:
Figure 1 is a schematic representation of parts of a wireless cellular network.
Figure 2 is a schematic representation of a network entity for use in a GSM-R network according to embodiments of the present invention.
Figure 3 is a schematic representation of a mobile station for use in a GSM-R network according to embodiments of the present invention.
Figure 4 is a flow chart illustrating an embodiment of the present invention.

### Specific description

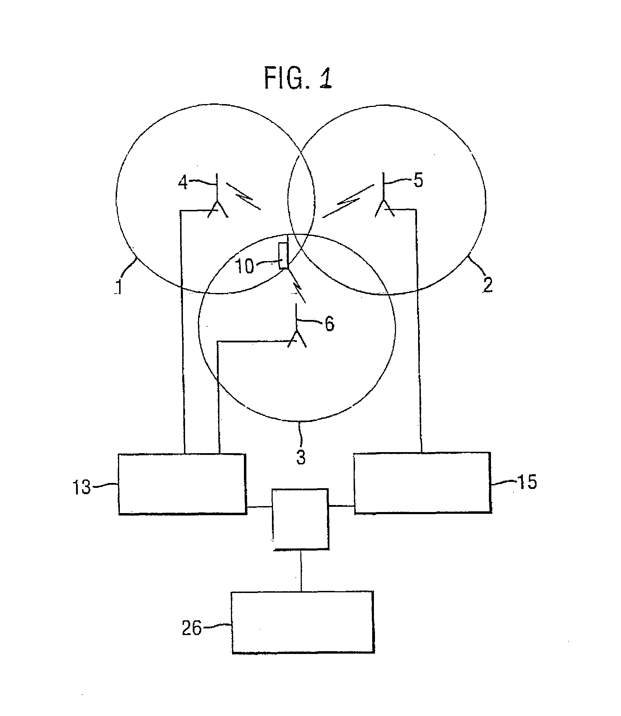

Reference is now made to figure 1 which is a simplified representation of part of an exemplary cellular system.

In this shown arrangement, three base stations, 4, 5 and 6 provide three access entities or cells 1 to 3.

Each cell is controlled by an appropriate controller. The controller (13 or 15) may be provided by any appropriate controller. The controllers 13 and 15 are configured to receive information from a service provider entity 26. A controller may be provided for each base station of a controller to control a plurality of base stations. Solutions where controllers are provided at individual base stations and/or in the radio access network level for controlling a plurality of base stations are also known. It should be appreciated that the name, location and number of the radio access network controllers depends on the system. For example, a UMTS terrestrial radio access network (UTRAN) may employ a controller node that is referred to as a radio network controller (RNC). In the GSM, CDMA 2000 (code division multiple access) and GPRS (general packet radio system) systems, the corresponding radio network controller entity is referred to as a base station controller (BSC).

It should be appreciated that the figure 1 representation is highly schematic and that in practice the number of base stations and cells may be substantially higher. One cell may include more than one base station site. A base station apparatus or site may also provide more than one cell. The radio access network may also comprise only one cell. These features depend on the implementation and circumstances. For example, GSM-R is typically implemented using dedicated base station towers close to the railway and the distance between the base stations is typically 3-4km.

Each base station 4 to 6 is arranged to transmit signals to and receive signals from a user equipment 10 of a mobile user via a wireless interface. The mobile user may use any appropriate user equipment adapted for communication to connect to the network. For example, the mobile user may access a cellular network by means of a personal computer (PC), personal data assistant (PDA), mobile station (MS) and so on.

The user equipment 10 is able to transmit signals to and receive signals from the base stations via the wireless interface. It should be appreciated that although one user equipment is shown in figure 1 for clarity, a number of user equipment may be in simultaneous communication with each base station.

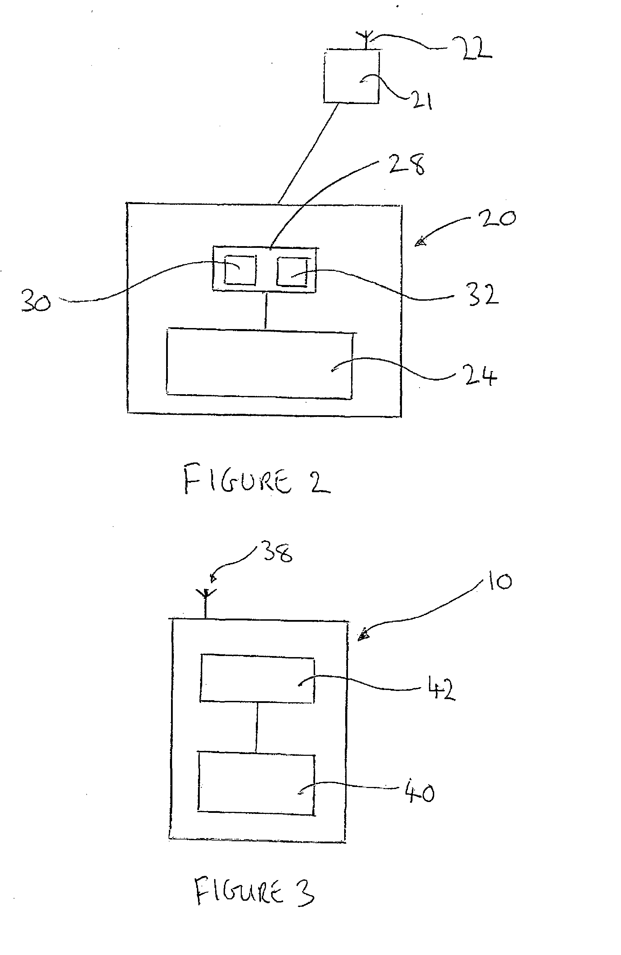

Figures 2 schematically shows a network entity configured to send System Information (SI) messages to the user equipment 10 in accordance with an embodiment of the present invention, and figure 3 schematically shows the user equipment 10 configured to receive such messages.

Turning to figure 2, the network entity 20 comprises an interface for transmitting system information messages and other signals to the air interface via a base station 21 and the antenna 22, and for receiving signals from devices via the air interface. The network entity 20 further comprises a memory 24 for storing information relating to the SI messages to be sent, and a processor 28 for processing the information contained in the memory before sending the information as an SI message. The processor further comprises a dividing module 30 configured for dividing the information in to parts, and a validity module 32 configured for attaching a validity indicator to each part. The entity 20 can thereby transmit SI messages, with each SI message divided in to parts and each part having an associated validity indicator. It should be appreciated that the network entity 20 is capable of sending any type of SI messages, and in particular SI10bis and SI10ter type messages.

Referring to figure 3, the user equipment 10 is schematically shown. The user equipment 10 comprises an antenna 38 for transmitting and receiving signals, and further comprises a memory 40 for storing information and a processor 42 for processing said information. The user equipment 10 is configured for receiving SI messages sent by the network entity 20.

The user may use the user equipment 10 for tasks such as making and receiving phone calls, for receiving and sending data from and to the network, for example multimedia content. The mobile station may also be provided with a display for displaying images and other graphical information for the user of the user equipment. Speakers may also be provided. The operation of the user equipment may be controlled by means of appropriate interface such as control buttons, voice commands and so on.

One particular problem relates to the amount of information relating to neighbour cells which is sent in the source cell to the user equipment 10, in particular the duplication of information sent in SI5 and the proposed SI10bis messages.

In general, in some embodiments neighbour cell information is divided into (at least) two classes, according to the likelihood of that information changing and therefore old information becoming invalid.

For example, the exact allocation (timeslot number and channel) of a group call allocation in the neighbouring cell may change much more frequently than the set of radio frequencies used in that cell.

If there is a large amount of data to send, messages may be constructed according to the class of information contained within them e.g. so that information of the same class is sent in the same message. This means that sending replacement information for a particular class may require as few as possible different messages.

Furthermore, messages (and classes) may be organised taking into account existing messages which the mobile may receive in the source or target cell.

When any information changes, a newly defined FACCH message may be sent to rapidly inform mobiles that information they may have received in the past is no longer valid which specifies exactly which class(es) of information for which neighbour cell(s) have/has changed.

Optionally, and particularly if only a small amount of information has changed, the FACCH message may in addition contain the replacement information, so that mobiles obtain the replacement valid information as soon as possible.

In addition, a further indication in the FACCH message may indicate whether or not the group call remains set up in that neighbour cell.

Indicating in a specific manner which information is invalid (i.e. in contrast to indicating 'all SI10bis/SI10ter data with sequence number i is invalid') may maximize the amount of data which the user equipment can still use, since the user equipment knows the data is still valid. Transmitting replacement data may be time-consuming, and it is desirable that the user equipment knows accurately which information (that the user equipment has already received) is actually still valid so that it doesn't have to wait for a new copy of the same information.

In one embodiment, applicable to scenarios where hopping is used, the Cell Channel Description and location of the Notification Channel (NCH) is considered in one class, and all other data is considered in a second class.

A single SI10bis message may contain information on multiple cells, however it is preferable that information for a particular cell is not split over multiple messages. A single SI10ter message may contain the Cell Channel Description information for only 1 cell (CCD is 16 octets, with available space per message of around 20 octets).

It is not necessary that information in different classes is separated into different messages. For example, if the Frequency Short List is used, then all information for one neighbour cell can be transmitted in one message; however, the data can still be partitioned into classes. This has an advantage in some embodiments of the invention that it is more likely that complete replacement information for a given class/cell combination can be included in the new FACCH message.

In one implementation of the present invention, the SI10ter message contains the Cell Channel Description (CCD), the identity of the cell (BCCH ARFCN and BSIC (Base Station Identity Code, or position-in-SI5 list) and the location of the NCH in the target cell. The location of the NCH may be required in case the associated SI10bis message for the cell is invalidated and the user equipment needs to be able to quickly locate the NCH in the target cell.

In some embodiments, this means that, in the event that a mobile has valid SI10ter data but not valid SI10bis information, the mobile can perform reselection, but without having to read the SII message in the target cell (since the SI10ter message contains a subset - the useful subset-of information that is transmitted in the SI1 message).

The RACH parameters may not be needed since Access Class information is not needed for continuation of the group call, and other parameters would be included in the SI10bis message (see above).

In some embodiments of the present invention, if invalidation of the SI10bis/ter message occurs it is much more likely that the information in SI10bis messages will change than the information in the SI10ter messages. Therefore a FACCH message indicating the invalidity of one or more neighbour cells' information specifies for each cell whether i) the SI10bis and/or ii) the SI10ter messages for that cell are now invalid. A further indication can indicate whether the group call remains set up in that neighbour cell (if the group call remains set up, then replacement SI10bis and/or SI10ter messages are to be expected; if the group call is not set up, then no replacement messages will be sent by the network).

Alternatively, if SI10ter is not used, then information within the SI10bis message can be partitioned into the two classes, e.g. ,the Frequency Short List (FSL). Separating the SI10bis/ter messages in this manner has several benefits.

First, if SI10ter messages are not invalidated, then the network can prioritise distribution of updated SI10bis messages over repetition of SI10ter messages. Secondly, if a user equipment does not receive an updated, valid SI10bis message, but has previously received a (still valid) SI10ter message, then cell reselection is still improved, relative to the legacy procedure, since the user equipment no longer needs to read the SI1 message in the target cell (one of the parts of the existing cell reselection procedure is that the mobile must receive the SI1 message in the target cell; however, the SI10ter message would contain all the necessary information).

One alternative approach would be to combine all the information regarding one cell into a complete unit, to be sent in one or more SI10bis messages; however, in some scenarios, this would require segmentation over two radio blocks anyway, and this would not preclude the possibility that different parts of the information could be invalidated independently.

A further enhancement is that independent sequence numbers are used for SI10ter and SI10bis message sets. As an even further and preferable enhancement, the FACCH message which contains the invalidation information may also contain replacement information (or as much of it as will fit in the message, if not all), so that a user equipment can immediately have complete up-to-date information to allow it to perform 'lossless' cell reselection.

An example of the approach is as follows.

SI10bis and SI10ter messages include sequence numbers. SI10bis and SI10ter messages with sequence number i are distributed for cells I to n. If the SI10bis message (but not the SI10ter message) for cell m becomes invalid and the group call remains set up a FACCH message indicating sequence number i+1 is used to convey this information. The meaning of this message is that: for cell k,k ≠ m all messages with sequence numbers i and i+1 are valid. For cell k, k = m, SI10bis messages with sequence number i+1 are valid and SI10bis messages with sequence number i are invalid. A mobile shall immediately delete any information received in the SI10bis message with sequence number i for cell k, and replace it with any replacement information received in the FACCH message.

For cell k, k = m, SI10ter messages with sequence number i and i+1 are valid. Subsequent messages are sent with sequence number i + 1.

In other words, in the event of some previously transmitted information relating to a neighbour cell becoming invalid, the new FACCH message may indicate that, for that cell a specific message (e.g. SI10bis), identified by a sequence number, is now invalid. It may also indicate that other information messages relating to the specific cell (e.g. SI10ter) with the same sequence number remains valid and also that that messages with the same sequence number, relating to other cells remain valid. The user equipment shall immediately delete any information received in the indicated message with the indicated sequence number. The FACCH message may contain new valid information to replace the invalid information in which case the mobile station shall replace the invalid information with any replacement information received in the FACCH message.

Subsequent messages are sent with a new sequence number; for messages which were not indicated as being invalid, these shall contain the same information as those sent with the previous sequence number.

Therefore in some embodiments, user equipment may store information sent in messages with a sequence number, deleting any corresponding information received previously with a lower sequence number.

Note that if it had been indicated that the group call is no longer set up in cell m, then the same rules as above apply, except that the network will not send new messages for cell m with sequence number i+1 until the group call is then set up again. However, for the addition of a group call, there is no need to increase the sequence number of messages.

In the case where hopping is not used, there would be no need for the SI10ter message. However, in this case, an appropriate division of information would be to combine the fact that hopping is not used and the location of the NCH in the target cell in one class ('class A'); this would be less likely to change than other information regarding the neighbour cell.

One advantage of this approach is that, in the event that the non-class A information becomes invalid and, before the mobile received replacement information (e.g. if that information could not fit in the FACCH message), the user equipment can still perform cell reselection better than using the legacy procedure. As it knows that the cell is not using hopping, it does not have to receive the SI1 message in the target cell (since it knows it does not need to receive the CCD), and additionally, it can immediately start receiving the NCH (notification channel), which will contain information on the location of the group call.

The inventors have identified that as a side effect of the above invention the need for sending of SI5 messages can be reduced or even removed entirely. As discussed above, the SI10 message which is sent on the ACCH includes parameters relating to neighbouring cells. In order to interpret this message, the mobile must know the list of all the BCCH frequencies which are included in SI5.

Alternatively, the mobile could decode this information for each cell if, for that cell, it knew the position in the ordered list of frequencies (the list is ordered in order of increasing radio frequency channel number).

One problem relates to the amount of information relating to neighbour cells which is sent in the source cell, in particular the duplication of information sent in SI5 and the proposed SI10bis messages. The inventors have identified the following ways in which this problem can be overcome:
Use case 1: all mobiles upgraded to use new SI10bis message; all neighbour cells contain group call. In this case, no SI5 message needs to be sent; the fact that no SI5 message will be sent is notified to the mobiles by a single bit indication in the SI10bis message(s).
Use case 2: Legacy mobiles present and/or one or more neighbour cells does not contain the group call. In this case SI5 must be provided; however, in this case, SI10bis would identify cells only by their position in the SI5 list, rather than by the BCCH ARFCN.
Use case 3: all mobiles upgraded; only some neighbour cells contain group call, but operator wishes to optimize the network by forcing mobiles currently in a group call to re-select to these cells. This would be configured as use case 1.

In one embodiment the SI10bis message is to include the 10-bit ARFCN to identify neighbouring cells.

The enhancement is to provide options to
a) exclude the ARFCN (in case SI5 is present in the cell)
b) include the 'position-in-SI5-list' (5-bit)
c) indicate that SI5 is not present in the cell (and implicitly, that all neighbour cells - or at least, all neighbour cells that the operator wishes the mobile to consider for reselection-contain the group call channel and are described in SI10bis messages).

In use cases 1 and 3, the ARFCN and position-in-SI5-list indications would be provided in SI10bis; no SI5 would be sent.

In use case 2, only the position-in-SI5-list indication would be provided in SI10bis; SI5 would be sent.

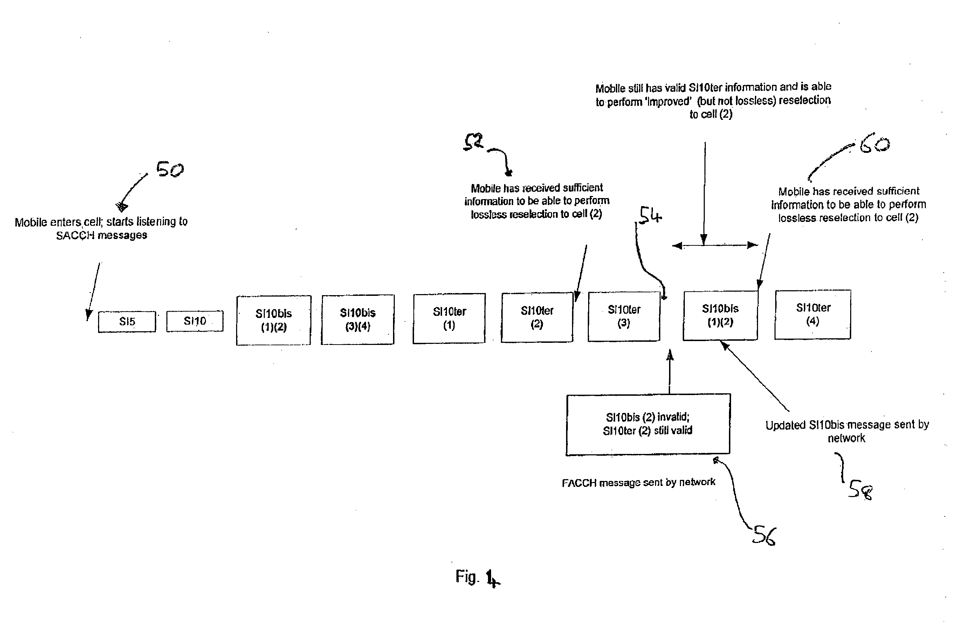

Referring to figure 4, this is a flow chart showing an exemplary embodiment of the process by which a user equipment, such as the user equipment 10 shown in figures 1 and 3, receives SI messages when attempting cell reselection in accordance with an embodiment of the present invention.

In this example the user equipment is moving from cell 1 to cell 2 (e.g. one of cells 1 to 3 shown in figure 1) and requires sufficient System Information to enable cell reselection to take place. At step 50, the user equipment enters cell 1 and starts listening to SACCH messages, including SI5 and SI10 type messages. As shown in figure 4 the SI10 messages comprise both SI10bis and SI10ter type messages, with each message comprising at least one part. The user equipment continues to receive the SI10bis and SI10ter messages until at step 52 the user equipment receives sufficient information to enable the user equipment to perform lossless reselection to cell 2.

At step 54 the SI10bis(2) information which has previously been received at the user equipment becomes invalid, so at step 56 a FACCH message is sent by the network informing the terminal of this fact. At this stage the user equipment still has sufficient valid SI10ter information and is able to perform improved, but not lossless, reselection to cell 2.

At step 58 an updated SI10bis message is sent from the network. This updated message contains the valid information that the user equipment requires, and so at step 60 the user equipment has sufficient information to enable the user equipment to perform lossless reselection to cell 2.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The above described operations may require data processing in the various entities. The data processing may be provided by means of one or more data processors. Similarly various entities described in the above embodiments may be implemented within a single or a plurality of data processing entities and/or data processors. Appropriately adapted computer program code product may be used for implementing the embodiments, when loaded to a computer. The program code product for providing the operation may be stored on and provided by means of a carrier medium such as a carrier disc, card or tape. A possibility is to download the program code product via a data network. Implementation may be provided with appropriate software in a server.

For example the embodiments of the invention may be implemented as a chipset, in other words a series of integrated circuits communicating among each other. The chipset may comprise microprocessors arranged to run code, application specific integrated circuits (ASICs), or programmable digital signal processors for performing the operations described above.

It is also noted herein that while the above describes exemplifying embodiments of the invention, there are several variations and modifications which may be made to the disclosed solution without departing from the scope of the present invention.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi-core processor architecture, as non-limiting examples.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. A method of distributing information to a plurality of user equipment (10) in a group call in a cell (1) to assist the user equipment (10) in cell reselection, the method comprising dividing the information into at least two parts and providing a validity indicator for each part, wherein allocation of information to each part is related to the likelihood of that information becoming invalid, and wherein the validity indicator is provided in a validity indicator message and the validity indicator message includes details of changes in cell reselection information and a group call set up indicator.

2. A method according to claim 1, wherein a first part contains information relating to semi-static configuration of at least one neighbouring cell (2,3) comprising frequency locations including radio frequencies available to the group call in each neighbouring cell (2,3).

3. A method according to any preceding claim, wherein a second part contains information relating to a variable configuration of at least one neighbouring cell (2,3) comprising current assignment of timeslot(s) and channel of the group call.

4. A method according to any preceding claim, wherein the validity indicator message includes a sequence number and neighbour cell information is transmitted together with the sequence number.

5. A method according to any preceding claim, wherein if the validity indicator indicates that previously sent information is invalid, then valid replacement information is sent with the validity indicator.

6. A method of receiving information at a user equipment in a group call in a cell (1) to assist the user equipment in cell reselection, the method comprising receiving the information divided into at least two parts and receiving a validity indicator for each part, wherein the validity indicator is received in a validity indicator message and the validity indicator message includes details of changes in cell reselection information and wherein the validity indicator includes a group call setup indicator.

7. A method according to claim 6, wherein the validity indicator message and neighbour cell information is received together with a sequence number, wherein the validity of previously received information is determined by applying predetermined validity rules comparing the sequence number associated with validity information with the sequence number(s) associated with previously received neighbour cell information.

8. An apparatus (4, 13) for distributing information to a plurality of user equipment (10) in a group call in a cell (1) to assist the user equipment in cell reselection, the apparatus (4, 13) comprising dividing means for dividing the information into at least two parts, and means for providing a validity indicator for each part, wherein the dividing means is configured to allocate the information to each part based on the likelihood of that information becoming invalid, and wherein the means for providing a validity indicator provides the validity indicator in a validity indicator message including details of changes in cell reselection information and a group call set up indicator.

9. An apparatus (4,13) according to claim 8, wherein a first part contains information relating to semi-static configuration of at least one neighbouring cell comprising frequency locations including radio frequencies available to the group call.

10. An apparatus according to any of claims 8 or 9 wherein a second part contains information relating to a variable configuration of the at least one neighbouring cell comprising current assignment of timeslot(s) and channel of the group call.

11. An apparatus (4,13) according to any of claims 8 to 10, wherein the validity indicator message includes a sequence number and neighbour cell information is transmitted together with the sequence number.

12. An apparatus according to any of claims 8 to 11, wherein the apparatus is configured to send replacement information with the validity indicator if the validity indicator indicates that previously sent information is invalid.

13. A user equipment (10) comprising receiving means for receiving neighbouring cell information in a group call in a cell to assist the user equipment (10) in cell reselection, the user equipment further configured to carry out receiving the neighbouring cell information divided into at least two parts and receiving a validity indicator for each part, wherein the validity indicator is received in a validity indicator message and the validity indicator message includes details of changes in cell reselection information and wherein the validity indicator includes a group call setup indicator.

14. A user equipment (10) according to claim 13, the receiving means configured for receiving the validity indicator message and neighbouring cell information together with a sequence number, the user equipment (10) further configured to determine the validity of previously received neighbouring information by applying predetermined validity rules comparing the sequence number associated with validity information with the sequence number(s) associated with previously received neighbouring cell information.

15. A computer program configured to perform the steps of any of claims 1 to 5, when the program is run on a processor (28) of an apparatus of any of claims 8 to 12.

16. A computer program configured to perform the steps of any of claims 6 or 7,
when the program is run on a processor (42) of an user equipment of any of claims 13 to 14.

## Patentansprüche

1. Verfahren zum Verteilen von Informationen an mehrere Anwendergeräte (10) in einem Gruppenanruf in einer Zelle (1), um das Anwendergerät (10) bei der Zellenneuauswahl zu unterstützen, wobei das Verfahren das Unterteilen der Informationen in wenigstens zwei Teile und das Bereitstellen eines Gültigkeitsindikators für jeden Teil umfasst, wobei die Zuweisung der Informationen zu jedem Teil mit der Wahrscheinlichkeit in Beziehung steht, dass diese Informationen ungültig werden, und wobei der Gültigkeitsindikator in einer Gültigkeitsindikatornachricht bereitgestellt ist und die Gültigkeitsindikatornachricht die Einzelheiten der Änderungen der Zellenneuauswahlinformationen und einen Gruppenanruf-Aufbauindikator enthält.

2. Verfahren nach Anspruch 1, wobei ein erster Teil Informationen bezüglich einer halbstatischen Konfiguration wenigstens einer Nachbarzelle (2, 3) enthält, die die Frequenzorte einschließlich der Funkfrequenzen, die für den Gruppenanruf in jeder Nachbarzelle (2, 3) verfügbar sind, umfassen.

3. Verfahren nach einem vorhergehenden Anspruch, wobei ein zweiter Teil Informationen bezüglich einer variablen Konfiguration wenigstens einer Nachbarzelle (2, 3) enthält, die die momentane Zuweisung des Zeitschlitzes (der Zeitschlitze) und des Kanals des Gruppenanrufs umfassen.

4. Verfahren nach einem vorhergehenden Anspruch, wobei die Gültigkeitsindikatornachricht eine laufende Nummer enthält und wobei die Informationen über die Nachbarzellen zusammen mit der laufenden Nummer gesendet werden.

5. Verfahren nach einem vorhergehenden Anspruch, wobei, wenn der Gültigkeitsindikator angibt, dass die vorher gesendeten Informationen ungültig sind, dann gültige Ersatzinformationen mit dem Gültigkeitsindikator gesendet werden.

6. Verfahren zum Empfangen von Informationen an einem Anwendergerät in einem Gruppenanruf in einer Zelle (1), um das Anwendergerät bei der Zellenneuauswahl zu unterstützen, wobei das Verfahren das Empfangen von Informationen, die in wenigstens zwei Teile unterteilt sind, und das Empfangen eines Gültigkeitsindikators für jeden Teil umfasst, wobei der Gültigkeitsindikator in einer Gültigkeitsindikatornachricht empfangen wird und die Gültigkeitsindikatornachricht die Einzelheiten der Änderung der Zellenneuauswahlinformationen enthält, und wobei der Gültigkeitsindikator einen Gruppenanruf-Aufbauindikator enthält.

7. Verfahren nach Anspruch 6, wobei die Gültigkeitsindikatornachricht und die Informationen über die Nachbarzellen zusammen mit einer laufenden Nummer empfangen werden, wobei die Gültigkeit der vorher empfangenen Informationen durch das Anwenden vorgegebener Gültigkeitsregeln bestimmt wird, wobei die den Gültigkeitsinformationen zugeordnete laufende Nummer mit der (den) laufenden Nummer(n) verglichen wird, die den vorher empfangenen Informationen über die Nachbarzellen zugeordnet ist (sind).

8. Vorrichtung (4, 13) zum Verteilen von Informationen an mehrere Anwendergeräte (10) in einem Gruppenanruf in einer Zelle (1), um das Anwendergerät bei der Zellenneuauswahl zu unterstützen, wobei die Vorrichtung (4, 13) Unterteilungsmittel zum Unterteilen der Informationen in wenigstens zwei Teile und Mittel zum Bereitstellen eines Gültigkeitsindikators für jeden Teil umfasst, wobei die Unterteilungsmittel konfiguriert sind, die Informationen basierend auf der Wahrscheinlichkeit, dass die Informationen ungültig werden, jedem Teil zuzuweisen, und wobei die Mittel zum Bereitstellen eines Gültigkeitsindikators den Gültigkeitsindikator in einer Gültigkeitsindikatornachricht bereitstellen, die die Einzelheiten der Änderungen der Zellenneuauswahlinformationen und einen Gruppenanruf-Aufbauindikator enthält.

9. Vorrichtung (4, 13) nach Anspruch 8, wobei der erste Teil Informationen bezüglich einer halbstatischen Konfiguration wenigstens einer Nachbarzelle enthält, die die Frequenzorte einschließlich der Funkfrequenzen, die für den Gruppenanruf verfügbar sind, umfassen.

10. Vorrichtung nach einem der Ansprüche 8 oder 9, wobei ein zweiter Teil Informationen bezüglich einer variablen Konfiguration der wenigstens einen Nachbarzelle enthält, die die momentane Zuweisung des Zeitschlitzes (der Zeitschlitze) und des Kanals des Gruppenanrufs umfassen.

11. Vorrichtung (4, 13) nach einem der Ansprüche 8 bis 10, wobei die Gültigkeitsindikatornachricht eine laufende Nummer enthält und wobei die Informationen über die Nachbarzellen zusammen mit der laufenden Nummer gesendet werden.

12. Vorrichtung nach einem der Ansprüche 8 bis 11, wobei die Vorrichtung konfiguriert ist, Ersatzinformationen mit dem Gültigkeitsindikator zu senden, wenn der Gültigkeitsindikator angibt, dass die vorher gesendeten Informationen ungültig sind.

13. Anwendergerät (10), das Empfangsmittel zum Empfangen der Informationen über die Nachbarzellen in einem Gruppenanruf in einer Zelle umfasst, um das Anwendergerät (10) bei der Zellenneuauswahl zu unterstützen, wobei das Anwendergerät ferner konfiguriert ist, das Empfangen der Informationen über die Nachbarzellen, die in wenigstens zwei Teile unterteilt sind, und das Empfangen eines Gültigkeitsindikators für jeden Teil auszuführen, wobei der Gültigkeitsindikator in einer Gültigkeitsindikatornachricht empfangen wird und die Gültigkeitsindikatornachricht die Einzelheiten der Änderungen der Zellenneuauswahlinformationen enthält und wobei der Gültigkeitsindikator einen Gruppenanruf-Aufbauindikator enthält.

14. Anwendergerät (10) nach Anspruch 13, wobei die Empfangsmittel konfiguriert sind, die Gültigkeitsindikatornachricht und die Informationen über die Nachbarzellen zusammen mit einer laufenden Nummer zu empfangen, wobei das Anwendergerät (10) ferner konfiguriert ist, die Gültigkeit der vorher empfangenen Nachbarinformationen durch das Anwenden vorgegebener Gültigkeitsregeln zu bestimmen, wobei die den Gültigkeitsinformationen zugeordnete laufende Nummer mit der (den) laufenden Nummer(n) verglichen wird, die den vorher empfangenen Informationen über die Nachbarzellen zugeordnet ist (sind).

15. Computerprogramm, das konfiguriert ist, die Schritte nach einem der Ansprüche 1 bis 5 auszuführen, wenn das Programm in einem Prozessor (28) einer Vorrichtung nach einem der Ansprüche 8 bis 12 ausgeführt wird.

16. Computerprogramm, das konfiguriert ist, die Schritte nach einem der Ansprüche 6 oder 7 auszuführen, wenn das Programm in einem Prozessor (42) eines Anwendergeräts nach einem der Ansprüche 13 bis 14 ausgeführt wird.

## Revendications

1. Un procédé de distribution d'informations à une pluralité d'équipements utilisateur (10) dans un appel de groupe dans une cellule (1) de façon à aider l'équipement utilisateur (10) dans une resélection de cellule, le procédé comprenant la subdivision des informations en au moins deux parties et la fourniture d'un indicateur de validité pour chaque partie, l'attribution d'informations à chaque partie est liée à la probabilité que les informations deviennent non valides, et l'indicateur de validité étant fourni dans un message d'indicateur de validité et le message d'indicateur de validité comprenant des détails de modifications dans des informations de resélection de cellule et un indicateur d'établissement d'appel de groupe.

2. Un procédé selon la revendication 1, dans lequel une première partie contient des informations relatives à une configuration semi-statique d'au moins une cellule voisine (2, 3) comprenant des attributions de fréquences incluant des fréquences radio disponibles à l'appel de groupe dans chaque cellule voisine (2, 3).

3. Un procédé selon l'une quelconque des revendications précédentes, dans lequel une deuxième partie contient des informations relatives à une configuration variable d'au moins une cellule voisine (2, 3) comprenant l'affectation courante d'intervalles de temps et d'un canal de l'appel de groupe.

4. Un procédé selon l'une quelconque des revendications précédentes, dans lequel le message d'indicateur de validité comprend un numéro de séquence et des informations de cellule voisine sont transmises conjointement avec le numéro de séquence.

5. Un procédé selon l'une quelconque des revendications précédentes, dans lequel, si l'indicateur de validité indique que des informations envoyées antérieurement sont non valides, alors des informations de remplacement valides sont envoyées avec l'indicateur de validité.

6. Un procédé de réception d'informations au niveau d'un équipement utilisateur dans un appel de groupe dans une cellule (1) destiné à aider l'équipement utilisateur dans une resélection de cellule, le procédé comprenant la réception d'informations subdivisées en au moins deux parties et la réception d'un indicateur de validité pour chaque partie, l'indicateur de validité étant reçu dans un message d'indicateur de validité et le message d'indicateur de validité comprenant des détails de modifications dans des informations de resélection de cellule et l'indicateur de validité comprenant un indicateur d'établissement d'appel de groupe.

7. Un procédé selon la revendication 6, dans lequel le message d'indicateur de validité et des informations de cellule voisine sont reçues conjointement avec un numéro de séquence, la validité des informations reçues antérieurement étant déterminée par l'application de règles de validité prédéterminées comparant le numéro de séquence associé à des informations de validité au(x) numéro(s) de séquence associé(s) à des informations de cellule voisine reçues antérieurement.

8. Un appareil (4, 13) destiné à la distribution d'informations à une pluralité d'équipements utilisateur (10) dans un appel de groupe dans une cellule (1) destiné à aider l'équipement utilisateur dans une resélection de cellule, l'appareil (4, 13) comprenant un moyen de subdivision destiné à la subdivision des informations en au moins deux parties, et un moyen de fourniture d'un indicateur de validité pour chaque partie, le moyen de subdivision étant configuré de façon à attribuer les informations à chaque partie en fonction de la probabilité que les informations deviennent non valides, et le moyen de fourniture d'un indicateur de validité fournissant l'indicateur de validité dans un message d'indicateur de validité incluant des détails de modifications dans des informations de resélection de cellule et un indicateur d'établissement d'appel de groupe.

9. Un appareil (4, 13) selon la revendication 8, dans lequel une première partie contient des informations relatives à une configuration semi-statique d'au moins une cellule voisine comprenant des attributions de fréquences contenant des fréquences radio disponibles à l'appel de groupe.

10. Un appareil selon l'une quelconque des revendications 8 ou 9 dans lequel une deuxième partie contient des informations relatives à une configuration variable de la au moins une cellule voisine comprenant l'affectation courante d'intervalles de temps et d'un canal de l'appel de groupe.

11. Un appareil (4, 13) selon l'une quelconque des revendications 8 à 10, dans lequel le message d'indicateur de validité comprend un numéro de séquence et des informations de cellule voisine sont transmises conjointement avec le numéro de séquence.

12. Un appareil selon l'une quelconque des revendications 8 à 11, dans lequel l'appareil est configuré de façon à envoyer des informations de remplacement avec l'indicateur de validité si l'indicateur de validité indique que des informations envoyées antérieurement sont non valides.

13. Un équipement utilisateur (10) comprenant un moyen de réception pour la réception d'informations de cellule voisine dans un appel de groupe dans une cellule destiné à aider l'équipement utilisateur (10) dans une resélection de cellule, l'équipement utilisateur étant configuré en outre de façon à effectuer la réception des informations de cellule voisine subdivisées en au moins deux parties et la réception d'un indicateur de validité pour chaque partie, l'indicateur de validité étant reçu dans un message d'indicateur de validité et le message d'indicateur de validité incluant des détails de modifications dans des informations de resélection de cellule et l'indicateur de validité comprenant un indicateur d'établissement d'appel de groupe.

14. Un équipement utilisateur (10) selon la revendication 13, le moyen de réception étant configuré pour la réception du message d'indicateur de validité et d'informations de cellule voisine conjointement avec un numéro de séquence, l'équipement utilisateur (10) étant configuré en outre de façon à déterminer la validité d'informations de cellule voisine reçues antérieurement par l'application de règles de validité prédéterminées comparant le numéro de séquence associé à des informations de validité au(x) numéro(s) de séquence associé(s) à des informations de cellule voisine reçues antérieurement.

15. Un programme informatique configuré de façon à exécuter les étapes selon l'une quelconque des revendications 1 à 5, lorsque le programme est exécuté sur un processeur (28) d'un appareil selon l'une quelconque des revendications 8 à 12.

16. Un programme informatique configuré de façon à exécuter les étapes selon l'une quelconque des revendications 6 ou 7, lorsque le programme est exécuté sur un processeur (42) d'un équipement utilisateur selon l'une quelconque des revendications 13 à 14.
